# EUROPÄISCHE PATENTSCHRIFT

(11) **EP 2 998 488 B1**
(45) Veröffentlichungstag und Bekanntmachung des Hinweises auf die Patenterteilung: **06.12.2017**
(21) Anmeldenummer: 15176876.9
(22) Anmeldetag: 15.07.2015
(51) Int. Cl.: E05B 65/10, H02G 3/16

(54) **FLUCHTWEGSICHERUNGSEINRICHTUNG**
EMERGENCY EXIT SECURITY DEVICE
DISPOSITIF DE SÉCURITÉ D'ISSUE DE SECOURS

(30) Priorität: 22.09.2014 DE 102014113640
(43) Veröffentlichungstag der Anmeldung: 23.03.2016
(73) Patentinhaber: ASSA ABLOY Sicherheitstechnik GmbH, 72458 Albstadt (DE)
(72) Erfinder: ROTENHAGEN, Ulrich, 72458 Albstadt (DE)
(74) Vertreter: Louis Pöhlau Lohrentz

(56) Entgegenhaltungen:
- EP-A1- 1 635 434
- EP-A1- 1 798 899
- EP-A1- 2 518 747
- DE-A1- 19 943 570
- DE-A1-102008 029 698
- DE-B3- 10 234 301
- DE-B3-102007 045 869
- DE-U1- 29 624 620
- DE-U1- 29 904 141

## Beschreibung

Die Erfindung betrifft eine Fluchtwegsicherungsvorrichtung nach den Merkmalen des Oberbegriffs des Anspruchs 1.

Aus der DE 198 34 013 A1 ist eine Fluchtwegsicherungsvorrichtung mit einem zweiteiligen Gehäuse bekannt. Ein Gehäuseunterteil wird mit einer Wand verschraubt. Das Gehäuseoberteil wird nach der Montage der Fluchtwegsicherungsvorrichtung an dem Gehäuseunterteil verschraubt.

Die EP 2 518 747 A1 zeigt eine Fluchtwegsicherungsvorrichtung mit einem in einem Gehäuse verschiebbar gelagerten Display. Das Gehäuse ist rückseitig offen ausgeführt und wird direkt in eine UP-Dose eingesetzt.

In der DE 296 24 620 U1 ist ein Sicherheits-Türterminal mit einem Gehäuse beschrieben. Das Gehäuse kann in einer Ausgestaltung an einer Wand als Aufputzgehäuse oder in einer anderen Ausgestaltung Unterputz montiert werden.

Eine elektrische Installationseinheit für ein Montage in einer UP-Dose ist in der EP 1 635 434 A1 gezeigt. Dort ist ein separat ausgebildeter Tragring vorgesehen, der mit der UP-Dose verbunden wird und ein Abdeckteil trägt.

Aus der DE 10 2007 045 869 B3 ist ein auf einer Wand montierbares elektronisches Installationsgerät mit einem flachen Sockelteil gezeigt. Das Sockelteil kann entweder an einer Wand oder an einer UP-Dose befestigt werden

Der Erfindung liegt die Aufgabe zugrunde, eine Fluchtwegsicherungseinrichtung zu schaffen, die einfach herzustellen und vor Ort einfach montierbar ist.

Erfingdungsgemäß wird diese Aufgabe mit einem Gegenstand gemäß den Merkmalen des Anspruchs 1 gelöst.

Es wird eine Fluchtwegsicherungsvorrichtung zur Sicherung einer Tür in einem Fluchtweg mit einer von einer Nottaste schaltbaren Verriegelungsvorrichtung vorgeschlagen, wobei die Nottaste ein Gehäuse aufweist, welches im Bereich eines Fluchtwegs an einer Wand montierbar ist, wobei vorgeschlagen wird, dass zur Montage des Gehäuses eine Adapterplatte vorgesehen ist, die über Befestigungsmittel mit einer Unterputzdose verbindbar ist und Aufnahmen zur Befestigung des Gehäuses aufweist.

Die vorgeschlagene Fluchtwegsicherungseinrichtung weist den Vorteil auf, dass die Nottaste ein Gehäuse aufweist, das mit einer Adapterplatte verbindbar ist und so eine unmittelbare Montage in einer Unterputzdose ermöglicht. Über die Adapterplatte kann das Gehäuse mechanisch sicher und stabil gehaltert werden, auch wenn das Gehäuse der Nottaste größer ist als eine UP-Dose oder wenn es ein hohes Gewicht aufweist.

Es kann vorgesehen sein, dass die Adapterplatte eine zentrale Öffnung aufweist, durch die ein Unterputzeinsatz des Gehäuses hindurch und in eine Unterputzdose hineingreift.

In einer vorteilhaften Ausbildung kann vorgesehen sein, dass die Befestigungsmittel zum Verbinden der Adapterplatte mit einer Hohlraumdose und/oder einer Unterputzschalterdose ausgebildet sind, sodass die Adapterplatte wahlweise an einer Hohlraumdose oder einer Unterputzschalterdose befestigbar ist.

Die Befestigungsmittel können eine Schraubverbindung und/oder eine Klemmverbindung oder über Schrauben betätigbare Krallen umfassen.

Es kann vorgesehen sein, dass die Adapterplatte zweite Befestigungsmittel zum Befestigen der Adapterplatte an einer Wand aufweist. Um eine gute Befestigung der Adapterplatte an einer Wand zu ermöglichen, kann vorgesehen sein, dass die Befestigungsmittel zwei Schraubverbindungen oder drei bzw. vier Schraubverbindungen umfassen. Dadurch kann eine mechanisch besonders stabile Befestigung erzielt werden.

Die zweiten Befestigungsmittel können als Schraubverbindungen ausgebildet sein, die so angeordnet sind, dass sie bei an einer UP-Dose bzw. Unterputzdose befestigter Adapterplatte weder in einem Bereich liegen, der in vertikaler Projektion oberhalb oder unterhalb einer Unterputzdose, noch in horizontaler Projektion links oder rechts der Unterputzdose liegt. So kann vermieden werden, dass eine Unterputzverkabelung durch die Befestigung des Gehäuses bzw. der Adapterplatte beeinträchtigt wird.

Bei einer Montage wird zuerst die Adapterplatte an einer UP-Dose befestigt und dann wahlweise über Schrauben mit einer Wand verbunden. Anschließend wird das Gehäuse mit der Adapterplatte verbunden.

Zwischen Gehäuse und Adapterplatte kann ein Sabotageschalter angeordnet sein, der ein Abheben oder Entfernen des Gehäuses von der Adapterplatte detektiert.

In einer vorteilhaften Ausbildung kann vorgesehen sein, dass das Gehäuse einen manuell betätigbaren Notschalter, insbesondere einen elektromechanischen Notschalter aufweist, der beim Betätigen einen elektrischen Schaltkontakt betätigt, um die Verriegelungseinrichtung anzusteuern bzw. zu entriegeln und/oder einen Alarm auszulösen.

In einer Ausführung kann das Gehäuse als Nottaste ein verschiebbares Display aufweisen, welches beim Verschieben einen elektrischen Schaltkontakt betätigt oder über eine Steuereinrichtung einen Befehl oder eine Meldung generiert, um die Verriegelungseinrichtung anzusteuern bzw. zu entriegeln und/oder einen Alarm auszulösen.

In einer vorteilhaften Ausbildung kann vorgesehen sein, dass das Gehäuse ein berührungsempfindliches Display, insbesondere einen Touchscreen aufweist, welches beim Berühren über eine Steuereinrichtung einen Befehl oder eine Meldung generiert, um die Verriegelungseinrichtung anzusteuern bzw. zu entriegeln und/oder einen Alarm auszulösen.

Es kann weiter vorgesehen sein, dass das Display als berührungsempfindliches Display, insbesondere als Touchscreen, ausgebildet ist und die Steuereinrichtung als Steuer- und Auswerteeinrichtung zum Auswerten von über das Display getätigten Eingaben ausgebildet ist.

Eine Anwendung der erfindungsgemäßen Fluchtwegsicherungseinrichtung kann zur Sicherung von Fluchtwegen mit einflügeligen oder zweiflügeligen Türen oder Schiebetüren in Gebäuden erfolgen. Die Türen können manuell öffenbare Türflügel oder motorisch angetriebene Türflügel aufweisen. Als Verriegelungselemente für die Türen können mechanische Verriegelungselemente, bspw. Schlösser aber auch elektromechanische Verriegelungselemente, beispielsweise Türöffner oder Haltemagnete für RWS-(Rettungswegsicherungs-) Systeme verwendet werden.

Die Erfindung wird nun anhand von Ausführungsbeispielen näher erläutert. Es zeigen
- Fig. 1: ein Ausführungsbeispiel einer Nottaste einer erfindungsgemäßen Fluchtwegsicherungsvorrichtung in perspektivischer Darstellung;
- Fig. 2: die Nottaste in Fig. 1 in einer Schnittansicht;
- Fig. 3: einen Montagerahmen der Nottaste in Fig. 1 mit einem Display in einer perspektivischen Vorderansicht;
- Fig. 4: den Montagerahmen in Fig. 3 in einer perspektivischen Rückansicht;
- Fig. 5: einen Gehäuseboden der Nottaste in Fig. 1 in perspektivischer Darstellung;
- Fig. 6: ein Gehäusemittelteil der Nottaste in Fig. 1 in perspektivischer Darstellung;
- Fig. 7: einen Abdeckrahmen der Nottaste in Fig. 1;
- Fig. 8: die Nottaste in Fig. 1 in einer perspektivischen Ansicht von unten;
- Fig. 9: eine Adapterplatte der Nottaste in Fig. 1;
- Fig. 10: die Fluchtwegsicherungsvorrichtung in schematischer Darstellung.

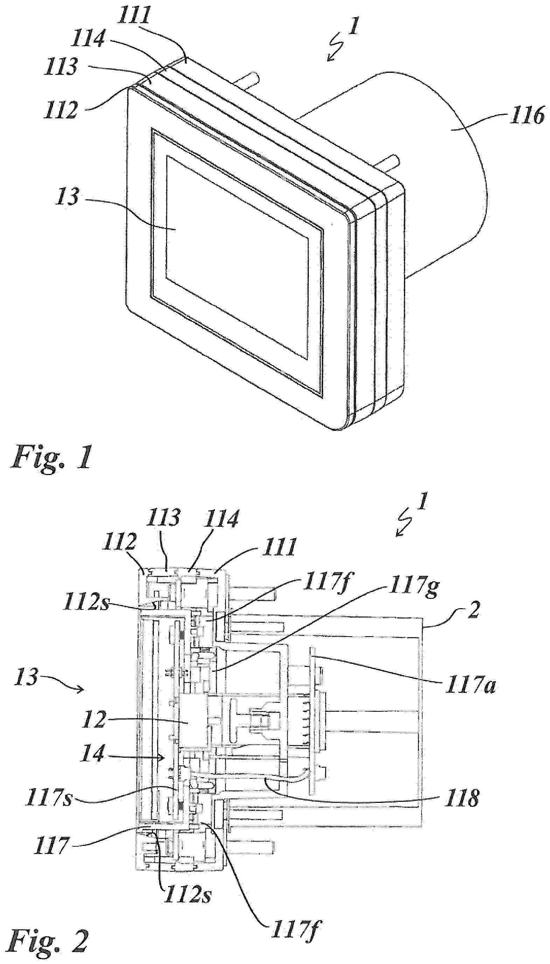

Die Fig. 1 bis 9 zeigen eine Nottaste 1, die in einer Fluchtwegsicherungsvorrichtung zur Sicherung einer Tür in einem Fluchtweg mit einer von einer Nottaste schaltbaren und/oder betätigbaren Verriegelungsvorrichtung einsetzbar ist.

Die Nottaste 1 weist ein Gehäuse 11 auf, das mehrere miteinander durch Verklipsen oder Verrasten verbindbare Teile umfasst, wobei ein Teil als zur Wand gerichteter Gehäuseboden 111 und ein Teil als Abdeckrahmen 112 und ein Teil als zwischen Gehäuseboden und Abdeckrahmen angeordnetes Mittelteil 113 ausgebildet ist.

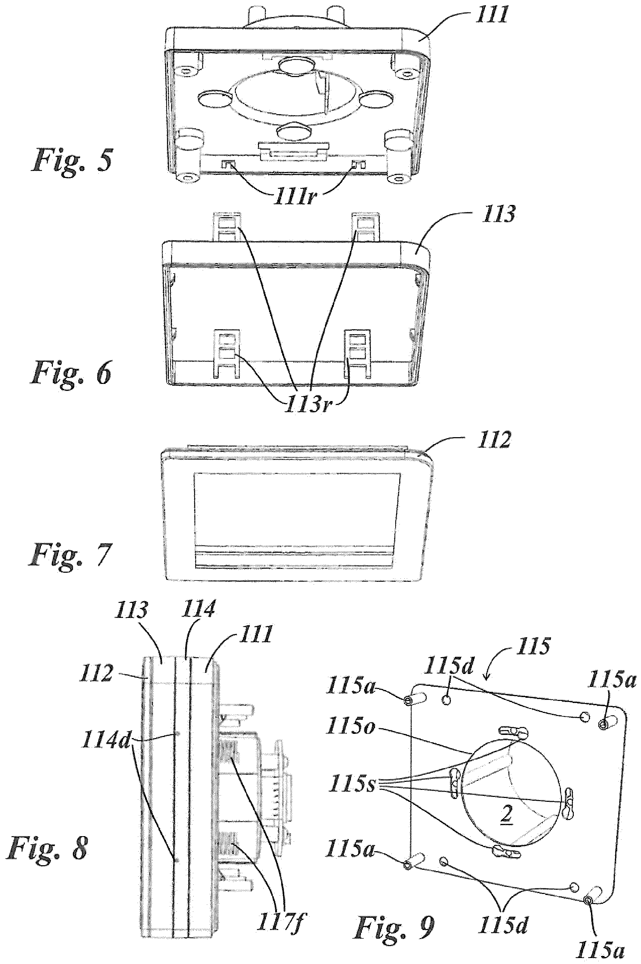

Zwischen dem Gehäuseboden 111 und dem Mittelteil 113 ist eine Rastverbindung ausgebildet, die mit normalem Werkzeug nicht lösbar ist. Fig. 6 zeigt das Gehäusemittelteil 113, das als ein Rahmen ausgebildet ist, an dessen Längsseiten leiterförmige Rastelemente 113r mit Rastausnehmungen angeordnet sind. Die Rastausnehmungen wirken mit hervorspringenden Rastelementen 111r zusammen, die an der Innenwand des Gehäusebodens 111 angeordnet sind (Fig. 5). Die Rastelemente 111r greifen in die Rastausnehmungen der Rastelemente 113r ein, wenn das Gehäusemittelteil 113 auf den Gehäuseboden 111 aufgesetzt ist. Dabei wird gleichzeitig eine zwischen dem Gehäusemittelteil 113 und dem Gehäuseboden 111 angeordnete Leuchtleiste 114 fixiert. Die Leuchtleiste 114 ist aus einem optisch transparenten Kunststoff ausgebildet. Sie ist geschlossen um das Gehäuse 11 umlaufend ausgeführt. Die Leuchtleiste 114 wird über eine formschlüssige Verbindung zwischen dem Mittelteil 113 und dem Gehäuseboden 111 gehaltert. Dazu weist die Leuchtleiste jeweils stirnseitig einen Steg auf, der in eine Ausnehmung des Gehäusebodens 111 bzw. des Mittelteils 113 eingreift, wie in Fig. 2 ersichtlich ist.

Beim Zusammenbau des Gehäuses 11 wird die Leuchtleiste 114 zwischen dem Gehäuseboden 111 und dem Mittelteil 113 eingelagert. Nach dem anschließenden Verklipsen des Gehäusebodens 111 mit dem Mittelteil 113 wird die Leuchtleiste 114 sicher gehalten. Die Leuchtleiste 114 wird über LEDs (Leuchtdioden) beleuchtet, die auf einer Platine in dem Gehäuse 11 angeordnet sind. Es sind mehrfarbige LEDs auf der Platine angeordnet, die von der Steuereinrichtung 14 angesteuert werden, um eine mehrfarbige Statusanzeige zu realisieren.

Die Rastverbindung zwischen dem Abdeckrahmen 112 und dem Gehäusemittelteil 113 ist lösbar durch Einführen eines nicht dargestellten Spezialwerkzeugs in Durchgangslöcher 114d, die in den Längsseiten der Leuchtleiste 114 angeordnet sind (siehe Fig. 8). So kann der Abdeckrahmen 112 einfach getauscht oder gewechselt werden.

In dem in den Fig. 1 bis 9 dargestellten Ausführungsbeispiel ist der Gehäuseboden 111 als Unterputzgehäuseboden mit einem Unterputzeinsatz 116 ausgebildet, der in eine Unterputzdose 2 einsetzbar ist. Zur Montage des Gehäuses 11 ist eine Adapterplatte 115 vorgesehen, die über Befestigungsmittel mit der Unterputzdose 2 verbindbar ist und Aufnahmen 115a zur Befestigung des Gehäuses 11 aufweist (siehe Fig. 9). Als Befestigungsmittel können vorzugsweise Befestigungsschrauben mit einem im Querschnitt kreisförmigen Schraubenkopf vorgesehen sein, die in der Adapterplatte 115 kreisbogenförmige Befestigungsschlitze 115s durchgreifen und in Gewindelöcher einschraubbar sind, die in der Unterputzdose 2 ausgebildet sind. Die Befestigungsschlitze 115s weisen jeweils einen als Durchgangsloch ausgebildeten Endabschnitt auf, dessen Innendurchmesser größer ist als der Außendurchmesser des Schraubenkopfes der Befestigungsschraube. Die Adapterplatte 115 weist eine zentrale Öffnung 1150 auf, durch die der Unterputzeinsatz 116 des Gehäuses 11 (siehe Fig. 1) hindurch und in die Unterputzdose 2 hineingreift.

Die Adapterplatte 115 ist so ausgebildet, dass sie auch mit einer Hohlraumdose verbindbar ist.

Weiter weist die Adapterplatte 115 Durchgangslöcher 115d zur Befestigung der Adapterplatte 115 auf einer Wand auf, wobei die Nottaste 1 in diesem Fall einen Aufputzgehäuseboden aufweist.

In dem Gehäuse 11 ist ein Sabotageschalter angeordnet, der ein Abheben oder Entfernen des Gehäuses 11 von der Adapterplatte 115 detektiert. Der Sabotageschalter ist mit der Steuerungseinrichtung 14 verbunden, so dass diese einen Sabotagealarm generieren kann.

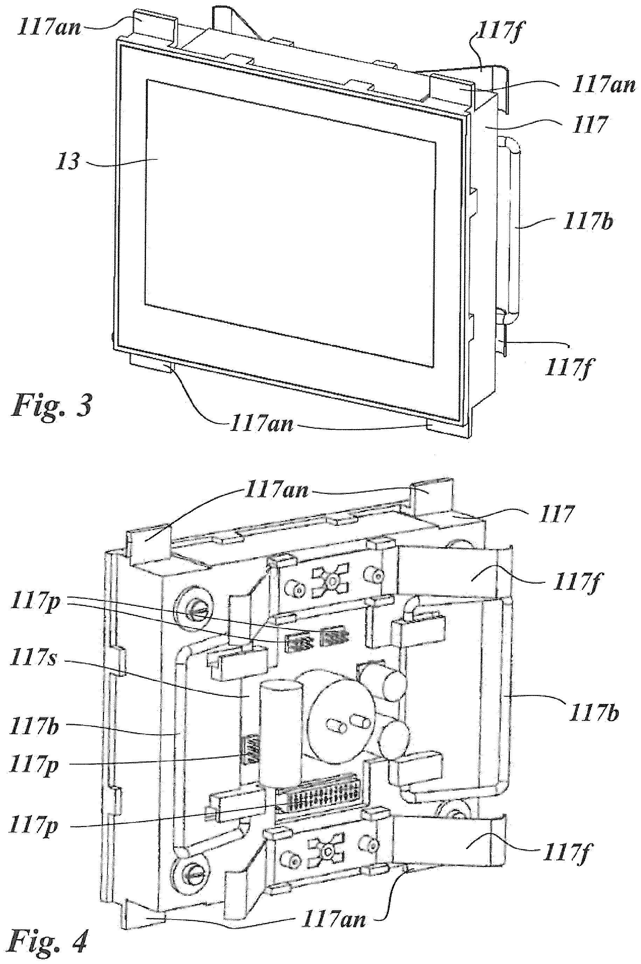

In dem Gehäuse 11 ist ein Display 13 angeordnet, das mit weiteren Baugruppen an einem Chassis 117 montiert ist (siehe Fig. 3). Das Chassis 117 ist zusammen mit dem Display 13 als austauschbare Baueinheit ausgebildet und in dem Gehäuse 11 verschiebbar gelagert.

Das Chassis 117 ist von Federn 117f in eine Neutralstellung beaufschlagt, in der es an der Innenseite des Gehäuses 11 anliegt. Das Chassis weist Anschläge 117an auf, die in der Neutralstellung an der Innenseite des Gehäuses 11 anliegen.

Die Funktion der Nottaste wird realisiert, indem durch Druck auf die Vorderseite des Displays 13 das Chassis 117 und damit auch das Display 13 entgegen der Kraft der Federn 117f in das Gehäuse 11 hinein schiebbar ist. Am Ende des Verschiebewegs wird ein elektrischer Schaltkontakt 12 betätigt, um eine Verriegelungseinrichtung zu lösen und/oder einen Alarm zu generieren, ähnlich wie bei einer herkömmlichen Nottaste.

Die Verschiebung erfolgt gegen die Kraft von Federn, um eine ergonomisch günstige Betätigung zu erzielen. Die als Blattfedern ausgebildeten Federn 117f sind an der Rückwand des Chassis 117 angeordnet. Die Federn 117f können alternativ auch als Schraubendruckfedern ausgebildet sein, wie in Fig. 8 dargestellt. Es ist auch möglich, Blattfedern und Schraubenfedern nebeneinander in einem Gehäuse zu verwenden.

Das Chassis 117 ist an Bügeln 117b, die an der Rückwand des Chassis 117 angeordnet und an der Innenwand des Gehäusebodens 111 abgestützt sind, in dem Gehäuse 11 parallel geführt. Das Chassis 117 ist daher ohne zu verkanten in das Gehäuse 11 einschiebbar (siehe Fig. 3 und 4). Die Bügel 117b sind als doppel-U-förmige Bügel ausgebildet, die an ihren Endabschnitten schwenkbar gelagert sind und deren Verbindungsabschnitt über die Innenwand des Gehäusebodens 111 gleitet, wenn das Chassis 117 verschoben wird. Das Display 13 wird durch an dem Abdeckrahmen 112 ausgebildete Einlaufschrägen 112s (siehe Fig. 2) in dem Abdeckrahmen zentriert, wobei die Vorderkanten des Chassis 117 mit den Einlaufschrägen 112s zusammenwirken.

An dem Chassis 117 ist eine Steuereinrichtung 14 angeordnet. Diese umfasst eine Grafikplatine 117g zur Ansteuerung des Displays 13 und eine Steuerplatine 117s. Auf der Steuerplatine 117s sind elektrische Schnittstellen 117p mit Steckverbindern angeordnet, die als Ports für die Signalübertragung zwischen der Steuerplatine 171s und der Grafikplatine 117g sowie zwischen der Steuerplatine 171s und Sensoren und/oder Schaltern und/oder Aktoren dienen. Zudem weist die Steuereinrichtung 14 eine digitale Schnittstelle zum Anschluss an einem digitalen Bus auf. Über den Bus ist die Steuereinrichtung 14 mit weiteren Fluchtwegsicherungsvorrichtungen und/oder mit zentralen Steuer- oder Zutrittskontrollanlagen verbindbar. Das Display 13 ist als ein berührungsempfindliches Display bzw. Touchscreen ausgebildet, auf dem beispielsweise eine stilisierte Nottaste und/oder ein Tastaturblock zur Eingabe eines Zutrittsberechtigungscodes darstellbar sind oder ist, wie weiter unten näher beschrieben.

Weiter umfasst die Steuereinrichtung 14 ein optisches Anzeigemodul mit mehrfarbigen LEDs, die auf der Steuerplatine 117s angeordnet sind. Diese beleuchten die Leuchtleiste 114 und werden von der Steuereinrichtung 14 angesteuert, um eine Statusanzeige und/oder eine Alarmanzeige zu realisieren. So wird die Leuchtleiste beispielsweise bei freigegebener Tür grün beleuchtet und bei verriegelter Tür rot beleuchtet.

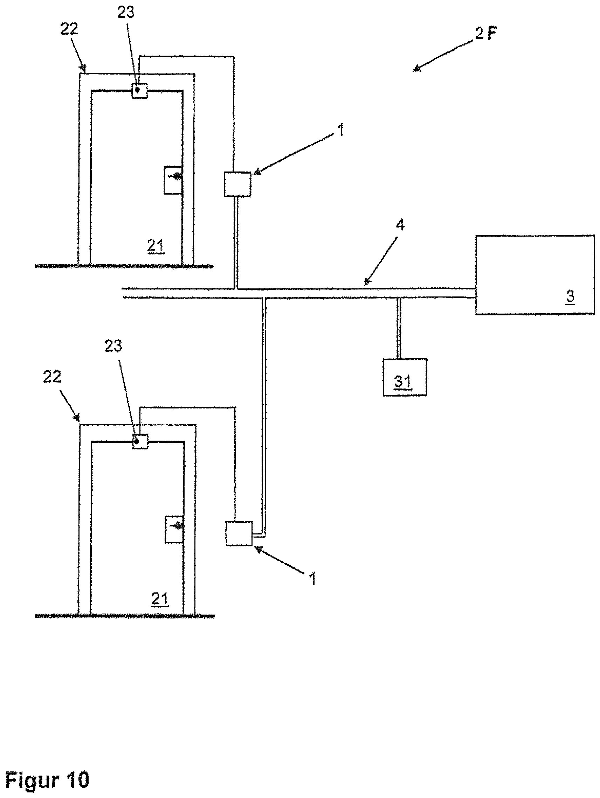

In der Figur 10 ist die Fluchtwegsicherungsvorrichtung in schematischer Darstellung gezeigt. Diese Fluchtwegsicherungsvorrichtung weist zwei Fluchtwege auf. In jedem Fluchtweg ist eine Tür angeordnet. Jede Tür weist einen Türflügel 21 auf, der über Bänder an einem Türrahmen 22 drehbar gelagert ist. Am oberen Ende des Türflügels ist eine zwischen Türrahmen und Türflügel wirkende Verriegelungseinrichtung in Form eines Haftmagneten 23 angeordnet. In bestromtem Zustand verriegelt der Haftmagnet die Tür und verhindert ein Öffnen des Türflügels. Wird der Haftmagnet 23 stromlos geschaltet, so ist die Tür über ein herkömmliches Türschloss begehbar.

Im Bereich jedes Fluchtwegs ist die Nottaste 1 an einer Wand montiert. Die Nottaste 1 ist in etwa auf Höhe des Türschlosses im Bereich der Schließkante eines Türflügels angeordnet. Die Nottaste 1 weist jeweils ein Gehäuse auf, in dem die Steuerungseinrichtung 14 aufgenommen ist.

Über eine elektrische Verbindungsleitung ist die Nottaste bzw. die Steuerungseinrichtung mit dem Verriegelungselement 23 verbunden.

Über einen digitalen CAN-Bus 4 sind die Nottasten untereinander sowie mit einer Zutrittskontrollanlage 3 verbunden. An den Bus 4 ist außerdem noch ein Zeitgenerator 31 angeschlossen, der ein Zeitsignal auf den Bus 4 einspeist.

Im Folgenden werden einzelne Funktionen der Steuereinrichtung 14 näher beschrieben.

Die Steuereinrichtung 14 ist von einem Alarmmodus in einen Bedienmodus schaltbar. Im Alarmmodus zeigt die Steuereinrichtung 14 auf dem berührungsempfindlichen Display 13 einen stilisierten Nottaster sowie eine Bedienleiste oder einen Bedienknopf an. Bei Berührung der Bedienleiste oder des Bedienknopfes wird kein Alarm generiert, sondern die Steuereinrichtung 14 wird in den Bedienmodus geschaltet.

Im Bereich der Leuchtleiste 114 bzw. des optischen Anzeigemoduls ist eine RFID-Empfangseinrichtung angeordnet und mit der Steuereinrichtung 14 verbunden. Über die RFID-Empfangseinrichtung können RFID-Transponder (RFID-Tags) ausgelesen und kann die Steuereinrichtung 14 gesteuert werden. So ist die Steuereinrichtung 14 durch einen gültigen RFID-Tag in einen Bedienmodus oder in einen Programmiermodus oder in einen Zutrittskontrollmodus schaltbar.

Wie in Figur 2 dargestellt ist, ist in dem Gehäuse 11 im Bereich der UP-Dose eine Anschlussplatine 117a angeordnet. Diese Anschlussplatine weist Klemmen auf, um die Steuereinrichtung 14 bzw. die Fluchtwegsicherungsvorrichtung elektrisch zu kontaktieren. Das Display 13 bzw. das Chassis 117 ist über ein beweglich geführtes Flachbandkabel 118 mit der Anschlussplatine 117a verbunden.

Die Steuereinrichtung 14 generiert im Alarmmodus bei Berührung des Displays 13 außerhalb des Bereichs der Bedienleiste oder des Bedienknopfs einen Voralarm und generiert nach Ablauf einer bestimmten Zeitspanne, sofern die Berührung fortdauert, einen Hauptalarm und steuert das Verriegelungselement zum Entriegeln der Tür an. Die Zeitspanne ist einstellbar.

Der Voralarm kann auch als selektiver Voralarm vorgesehen sein, indem nur eine Berührung des Displays 13 im Bereich des von der Steuereinrichtung 14 auf dem Display 13 angezeigten Nottasters einen Voralarm auslöst. Nach Ablauf der einstellbaren Zeitspanne, sofern die Berührung fortdauert, wird durch die Steuereinrichtung 14 ein Hauptalarm auslöst. Parallel mit dem Auslösen des Hauptalarms steuert die Steuereinrichtung 14 ein Verriegelungselement zum Entriegeln der Tür an.

Beim Verschieben des Displays 13 durch Druck auf die Vorderseite des Displays 13 wird ein elektrischer Schaltkontakt 12 betätigt, der auf der Steuerplatine 117s angeordnet ist. Die Steuereinrichtung 14 generiert im Alarmmodus beim Betätigen des elektrischen Schaltkontakts 12 einen Hauptalarm und steuert das Verriegelungselement zum Entriegeln der Tür an.

Das Auslösen des Hauptalarms kann wahlweise über die Betätigung des elektrischen Schaltkontakts 12 oder über den Voralarm und andauerndes Berühren des Displays 13 erfolgen.

Die Steuereinrichtung 14 ist in einem Bedienmodus programmierbar und/oder konfigurierbar. Im Rahmen einer Programmierung oder Konfiguration der Steuereinrichtung 14 können über ein auf dem Display 301 angezeigtes Bedienprogramm Parameter eingegeben oder verändert werden bzw. einzelne Funktionen der Steuereinrichtung 14 aktiviert oder deaktiviert werden. Beispielsweise kann über Parameter eingestellt werden, dass der Voralarm als selektiver Voralarm geschaltet ist, oder es kann die Zeitspanne bis zum Auslösen des Hauptalarms eingestellt bzw. justiert werden.

Der Bedienmodus der Steuereinrichtung 14 ist als Zutrittskontrollmodus ausgebildet und die Steuereinrichtung 14 zeigt im Zutrittskontrollmodus auf dem Display 13 einen Tastaturblock zur Eingabe eines Zutrittsberechtigungscodes an. Bei Eingabe eines berechtigten Zutrittsberechtigungscodes steuert die Steuereinrichtung 14 ein Verriegelungselement zum Entriegeln der Tür an, ohne dass ein Alarm ausgelöst wird.

Die Steuereinrichtung 14 weist einen wiederbeschreibbaren Protokollspeicher auf, um Ereignisse abzuspeichern. Dazu versieht die Steuereinrichtung 14 Ereignisse, beispielsweise eine Alarmmeldung oder eine Öffnung der Tür oder eine Eingabe eines Zutrittsberechtigungscodes mit einer Zeitinformation und speichert dieses verbundene Datum in dem Protokollspeicher.

Die Steuereinrichtung 14 weist einen Bedienzeitzähler auf, wobei die Steuereinrichtung 14 den Bedienzeitzähler beim Umschalten vom Alarmmodus in den Bedienmodus triggert. Der Bedienzeitzähler schaltet nach Ablauf einer bestimmten, insbesondere vorwählbaren Zeitspanne die Steuereinrichtung 14 von dem Bedienmodus in den Alarmmodus zurück.

Die Steuereinrichtung 14 triggert im Bedienmodus den Bedienzeitzähler bei einer Eingabe neu bzw. setzt den Bedienzeitzähler zurück.

Die Steuereinrichtung 14 weist einen Alarmzeitgeber und einen Türsensor zum Überwachen einer Öffnung der Tür auf, wobei die Steuereinrichtung 14 im Alarmmodus beim Generieren des Hauptalarms und/oder Lösen der Verriegelungseinrichtung den Alarmzeitgeber triggert und dieser die Steuereinrichtung 14 nach Ablauf einer bestimmten, insbesondere voreinstellbaren Alarmzeitspanne zum Rücksetzen des Hauptalarms und zur Verriegelung der Verriegelungsvorrichtung ansteuert, wenn während der Alarmzeitspanne keine Öffnung der Tür erfolgt ist.

Die Steuereinrichtung 14 schaltet dauerhaft in einem Alarm-Offen-Modus, wenn innerhalb der Alarmzeitspanne eine Öffnung der Tür erfolgt ist.

Die Steuereinrichtung 14 zeigt im Alarm-Offen-Modus auf dem Display 13 und/oder einer optischen Statusanzeige ein dauerhaftes Alarmöffnungssignal an. Als optische Statusanzeige ist in dem in Fig. 1 bis 9 dargestellten Ausführungsbeispiel die Leuchtleiste 114 vorgesehen.

Die Steuereinrichtung ist so ausgebildet, dass sie nur nach Codeeingabe oder Betätigen eines Schlüsselschalters aus dem Alarm-Offen-Modus zurück in den Alarmmodus oder in einen Grundmodus schaltbar ist. Der Alarm-Offen-Modus simuliert somit die von einem herkömmlichen Bus-Terminal bekannte mechanische Verrastung der Nottaste.

Im Alarmmodus zeigt die Steuereinrichtung 14 nach dem Auslösen eines Voralarms auf dem Display 13 die verbleibende Restzeit bis zum Auslösen des Hauptalarms an. Dies erfolgt, indem beispielsweise die Steuereinrichtung 14 einen mit der Restzeit synchron abnehmenden Balken oder einen abnehmenden Kreis auf dem Display 13 anzeigt. Es kann auch direkt die verbleibende Restzeit in Sekunden angezeigt werden.

Die Steuereinrichtung 14 gibt im Alarmmodus die Verriegelungseinrichtung verzögert frei und zeigt auf dem Display die verbleibende Restzeit bis zum Freigeben der Verriegelungseinrichtung an.

Die Steuereinrichtung 14 weist eine Bus-Schnittstelle auf, über die sie an einen digitalen Bus anschließbar ist. Über den digitalen Bus kann die Steuereinrichtung Statusmeldungen und/oder Alarmmeldungen versenden und/oder empfangen. Zudem kann die Steuereinrichtung 14 über den digitalen Bus eine Verriegelungseinrichtung und/oder einen optischen und/oder akustischen Alarmgeber ansteuern.
Die Steuereinrichtung 14 empfängt über den digitalen Bus ein Zeitsignal.
Dieses wird von der Steuereinrichtung 14 ausgewertet und mit Statusmeldungen oder Alarmmeldungen verknüpft, indem die Steuereinrichtung 14 Meldungen und/oder Ereignisse mit einer aus dem Zeitsignal gewonnenen Zeitinformation verbindet und diese als verbundenes Datum über die Bus-Schnittstelle versendet und/oder in einem lokalen Speicher abspeichert.

Um die Zeiten zu überbrücken, in denen über den digitalen Bus kein Zeitsignal empfangbar ist, weist die Steuereinrichtung 14 einen Zeitzähler auf. Dieser Zeitzähler wird in kurzen Abständen mit dem über die Bus-Schnittstelle empfangenen Zeitsignal synchronisiert. Somit kann auf eine eigene Notstromversorgung durch Akkus oder Kondensatoren verzichtet werden.

Die Steuereinrichtung 14 ist in einen Zutrittskontrollmodus schaltbar und verbindet in dem Zutrittskontrollmodus auftretende Meldungen und/oder Ereignisse mit einem Zeitstempel und sendet sie über die Bus-Schnittstelle und/oder speichert sie in einem lokalen Zutrittskontrollspeicher ab.

An den Bus ist eine Steuerzentrale angeschlossen, die das Zeitsignal generiert und über die Bus-Schnittstelle auf den Bus sendet.

Die Steuerzentrale ist an das Internet angeschlossen und generiert das Zeitsignal beispielsweise auf Basis eines im Internet verfügbaren Zeitservers.

Sofern keine Verbindung zum Internet besteht, ist ein Zeitzeichengenerator an den Bus angeschlossen. Der Zeitzeichengenerator weist einen Uhrenbaustein auf und generiert das Zeitsignal auf Basis der von dem Uhrenbaustein gelieferten Zeit. Der Zeitzeichengenerator sendet das Zeitsignal dann über eine Bus-Schnittstelle auf den Bus.

Der Zeitzeichengenerator weist eine eigene Notstromversorgung auf. Die Notstromversorgung kann beispielsweise einen aufladbaren Akkumulator und/oder einen Kondensator aufweisen.

Es können mehrere Nottasten mit jeweils einer eigenen Steuereinrichtung an den Bus angeschlossen sein und diese mehreren Steuereinrichtungen sich untereinander durch das Zeitsignal synchronisieren.

Es ist auch vorgesehen, dass mehrere Nottasten sich untereinander durch ein Ereignis, beispielsweise ein Alarmsignal, einen Hauptalarm oder einen Sabotagealarm synchronisieren.

Der Zeitgenerator kann in eine Nottaste integriert sein, insbesondere in einem Gehäuse einer Nottaste integriert angeordnet sein.

### Bezugszeichenliste

- 1: Nottaste
- 2: Unterputzdose
- 11: Gehäuse
- 12: Schaltkontakt
- 13: Display
- 14: Steuereinrichtung
- 111: Gehäuseboden
- 111r: Rastelement
- 112: Abdeckrahmen
- 112s: Einlaufschräge
- 113: Mittelteil
- 113r: Rastelement
- 114: Leuchtleiste
- 114d: Durchgangsloch
- 115: Adapterplatte
- 115a: Aufnahme
- 115d: Durchgangsloch
- 115o: zentrale Öffnung
- 115s: Befestigungsschlitz
- 116: Unterputzeinsatz
- 117: Chassis
- 117a: Anschlussplatine
- 117an: Anschlag
- 117b: Bügel
- 117f: Feder
- 117g: Grafikplatine
- 117p: Port
- 117s: Steuerplatine
- 118: Flachbandkabel
- 2F: Fluchtwegsicherungsvorrichtung
- 21: Tür
- 22: Türrahmen
- 23: Verriegelungseinrichtung
- 3: Zutrittskontrollzentrale
- 31: Zeitserver
- 4: Can-Bus

## Patentansprüche

1. Fluchtwegsicherungsvorrichtung zur Sicherung einer Tür in einem Fluchtweg mit einer von einer Nottaste (1) schaltbaren, insbesondere entriegelbaren Verriegelungsvorrichtung,
wobei die Nottaste (1) ein Gehäuse aufweist oder in oder an einem Gehäuse angeordnet ist, welches im Bereich eines Fluchtwegs an einer Wand montierbar ist,
**dadurch gekennzeichnet,**
**dass** zur Montage des Gehäuses eine Adapterplatte (115) vorgesehen ist, die über Befestigungsmittel mit einer Unterputzdose (2) verbindbar ist und Aufnahmen (115a) zur Befestigung des Gehäuses aufweist, und wobei die Adapterplatte (115) zweite Befestigungsmittel zum Befestigen der Adapterplatte (115) an einer Wand aufweist wobei die zweiten Befestigungsmittel als Schraubverbindungen ausgebildet sind, die so angeordnet sind, dass sie bei an einer Unterputzdose (2) befestigter Adapterplatte (115) weder in einem Bereich liegen, der in vertikaler Projektion oberhalb oder unterhalb einer Unterputzdose (2), noch in horizontaler Projektion links oder rechts der Unterputzdose (2) liegt.

2. Fluchtwegsicherungsvorrichtung nach Anspruch 1,
**dadurch gekennzeichnet,**
**dass** die Adapterplatte (115) eine zentrale Öffnung (115o) aufweist, durch die ein Unterputzeinsatz des Gehäuses hindurch und in eine Unterputzdose (2) hineingreift.

3. Fluchtwegsicherungsvorrichtung nach Anspruch 1 oder 2,
**dadurch gekennzeichnet,**
**dass** die Befestigungsmittel zum Verbinden der Adapterplatte (115) mit einer Hohlraumdose und/oder einer Unterputzschalterdose ausgebildet sind, sodass die Adapterplatte (115) wahlweise an einer Hohlraumdose oder einer Unterputzschalterdose befestigbar ist.

4. Fluchtwegsicherungsvorrichtung nach Anspruch 3,
**dadurch gekennzeichnet,**
**dass** die Befestigungsmittel eine Schraubverbindung und/oder eine Klemmverbindung umfassen.

5. Fluchtwegsicherungsvorrichtung nach einem der vorhergehenden Ansprüche,
**dadurch gekennzeichnet,**
**dass** zwischen Gehäuse und Adapterplatte (115) ein Sabotageschalter angeordnet ist, der ein Abheben oder Entfernen des Gehäuses von der Adapterplatte (115) detektiert.

6. Fluchtwegsicherungsvorrichtung nach einem der vorhergehenden Ansprüche,
**dadurch gekennzeichnet,**
**dass** das Gehäuse als Nottaste einen manuell betätigbaren Notschalter aufweist, der beim Betätigen einen elektrischen Schaltkontakt betätigt, um die Verriegelungseinrichtung anzusteuern bzw. zu entriegeln und/oder einen Alarm auszulösen.

7. Fluchtwegsicherungsvorrichtung nach einem der Ansprüche 1 - 5,
**dadurch gekennzeichnet,**
**dass** das Gehäuse als Nottaste ein verschiebbares Display (13) aufweist, welches beim Verschieben einen elektrischen Schaltkontakt (12) betätigt oder über eine Steuereinrichtung (14) einen Befehl oder eine Meldung generiert, um die Verriegelungseinrichtung anzusteuern bzw. zu entriegeln und/oder einen Alarm auszulösen.

8. Fluchtwegsicherungsvorrichtung nach einem der Ansprüche 1 - 5 oder 7,
**dadurch gekennzeichnet,**
**dass** das Gehäuse als Nottaste ein berührungsempfindliches Display (13), insbesondere einen Touchscreen aufweist, welches beim Berühren über eine Steuereinrichtung (14) einen Befehl oder eine Meldung generiert, um die Verriegelungseinrichtung anzusteuern bzw. zu entriegeln und/oder einen Alarm auszulösen.

9. Fluchtwegsicherungsvorrichtung nach Anspruch 7 oder 8,
**dadurch gekennzeichnet,**
**dass** das Display (13) als berührungsempfindliches Display, insbesondere als Touchscreen, ausgebildet ist und die Steuereinrichtung (14) als Steuer- und Auswerteeinrichtung zum Auswerten von über das Display (13) getätigten Eingaben ausgebildet ist.

## Claims

1. Escape route security device for securing a door in an escape route, having a locking device that can be switched, in particular unlocked, by an emergency button (1),
wherein the emergency button (1) has a housing or is arranged in or on a housing which can be mounted on a wall in the region of an escape route,
**characterised in that**
an adapter plate (115) is provided for mounting the housing, said adapter plate (115) being able to be connected to a flush-mounted socket (2) via fixing means and having receivers (115a) for fixing the housing, and wherein the adapter plate (115) has second fixing means for fixing the adapter plate (115) on a wall, wherein the second fixing means are formed as screw connections that are arranged in such a way that, in the case of an adapter plate (115) fixed on a lower flush-mounted socket (2), they are neither in a region that lies above or below a lower flush-mounted socket (2) in the vertical projection, nor that lies to the left or right of the of the lower flush-mounted socket (2) in the horizontal projection.

2. Escape route security device according to claim 1,
**characterised in that**
the adapter plate (115) has a central opening (115o) through which a flush insert of the housing reaches and engages in a flush-mounted socket (2).

3. Escape route security device according to claim 1 or 2,
**characterised in that**
the fixing means are designed to connect the adapter plate (115) to a chamber socket and/or a lower flush-mounted switch socket, such that the adapter plate (115) can be selectively fixed on a chamber socket or a flush-mounted switch socket.

4. Escape route security device according to claim 3,
**characterised in that**
the fixing means comprise a screw connection and/or a clamping connection.

5. Escape route security device according to one of the preceding claims,
**characterised in that**
a sabotage switch is arranged between the housing and the adapter plate (115), said sabotage switch detecting when the housing is lifted off or removed from the adapter plate (115).

6. Escape route security device according to one of the preceding claims,
**characterised in that**
the housing has an emergency switch that can be actuated manually as the emergency button that, in the event of actuation, actuates an electric switching contact in order to control or unlock the locking device and/or to trigger an alarm.

7. Escape route security device according to one of claims 1-5,
**characterised in that**
the housing has a moveable display (13) as the emergency button, said moveable display actuating an electric switching contact (12) when moved, or generating a command or report by means of a control device (14) in order to control or to unlock the locking device and/or to trigger an alarm.

8. Escape route security device according to one of claims 1-5 or 7,
**characterised in that**
the housing has a touch-sensitive display (13), in particular a touchscreen, as the emergency button, said touch-sensitive display (13) generating a command or a report by means of a control device (14) in the event of touching in order to control or to unlock the locking device and/or to trigger an alarm.

9. Escape route security device according to claim 7 or 8,
**characterised in that**
the display (13) is formed as a touch-sensitive display, in particular as a touchscreen, and the control device (14) is formed as a control and evaluation device for evaluating input made via the display (13).

## Revendications

1. Dispositif de sécurisation d'issue de secours pour la sécurisation d'une porte dans une issue de secours avec un dispositif de verrouillage pouvant être actionné, plus particulièrement déverrouillé, à l'aide d'un bouton d'urgence (1),
le bouton d'urgence (1) comprenant un boîtier ou étant disposé dans ou sur un boîtier qui peut être monté au niveau d'une issue de secours sur un mur,
**caractérisé en ce que**
pour le montage du boîtier, une plaque d'adaptation (115) est prévue, qui peut être reliée, par l'intermédiaire de moyens de fixation, à une boîte encastrée (2) et qui comprend des logements (115a) pour la fixation du boîtier et la plaque d'adaptation (115) comprenant des deuxièmes moyens de fixation pour la fixation de la plaque d'adaptation (115) sur un mur, les deuxièmes moyens de fixation étant conçus comme des liaisons vissées qui sont disposées de façon à ce que, lorsque la plaque d'adaptation (115) est fixée à une boîte encastrée (2), elles ne soient disposées ni dans une zone qui se trouve, en projection verticale, au-dessus ou en dessous d'une boîte encastrée (2) ni, en projection horizontale, à gauche ou à droite de la boîte encastrée (2).

2. Dispositif de sécurisation d'issue de secours selon la revendication 1, **caractérisé en ce que**
la plaque d'adaptation (115) comprend une ouverture centrale (115o) à travers laquelle un insert encastré du boîtier s'emboîte dans une boîte encastrée (2).

3. Dispositif de sécurisation d'issue de secours selon la revendication 1 ou 2,
**caractérisé en ce que**
les moyens de fixation sont conçus pour la liaison de plaque d'adaptation (115) avec une prise encastrable et/ou un interrupteur encastrable, de façon à ce que la plaque d'adaptation (115) puisse être fixée au choix à une prise encastrable ou à un interrupteur encastrable.

4. Dispositif de sécurisation d'issue de secours selon la revendication 3,
**caractérisé en ce que**
les moyens de fixation comprennent une liaison vissée et/ou une liaison par serrage.

5. Dispositif de sécurisation d'issue de secours selon l'une des revendications précédentes,
**caractérisé en ce que**
entre le boîtier et la plaque d'adaptation (115) se trouve un interrupteur anti-sabotage qui détecte un soulèvement ou un retrait du boîtier de la plaque d'adaptation (115).

6. Dispositif de sécurisation d'issue de secours selon l'une des revendications précédentes,
**caractérisé en ce que**
le boîtier comprend, en tant que bouton d'urgence, un interrupteur d'urgence actionnable manuellement qui, lors de l'actionnement, actionne un commutateur électrique permettant de commander ou de déverrouiller le dispositif de verrouillage et/ou de déclencher une alarme.

7. Dispositif de sécurisation d'issue de secours selon l'une des revendications 1 à 5,
**caractérisé en ce que**
le boîtier comprend, en tant que bouton d'urgence, un affichage mobile (13) qui, lors de son déplacement, actionne un commutateur électrique (12) ou génère, par l'intermédiaire d'un dispositif de commande (14), une commande ou un message permettant de commander ou de déverrouiller le dispositif de verrouillage et/ou de déclencher une alarme.

8. Dispositif de sécurisation d'issue de secours selon l'une des revendications 1 à 5 ou 7,
**caractérisé en ce que**
le boîtier comprend, en tant que bouton d'urgence, un affichage sensible au contact (13), plus particulièrement un écran tactile, qui, lors d'un contact, génère, par l'intermédiaire d'un dispositif de commande (14), une commande ou un message permettant de commander ou de déverrouiller le dispositif de verrouillage et/ou de déclencher une alarme.

9. Dispositif de sécurisation d'issue de secours selon la revendication 7 ou 8,
**caractérisé en ce que**
l'affichage (13) est conçu comme un affichage sensible au contact, plus particulièrement comme un écran tactile et le dispositif de commande (14) est conçu comme un dispositif de commande et d'analyse pour l'analyse d'entrées actionnées par l'intermédiaire de l'affichage (13).
